# EUROPEAN PATENT SPECIFICATION

(11) **EP 3 046 371 B1**
(45) Date of publication and mention of the grant of the patent: **02.10.2019**
(21) Application number: 15151255.5
(22) Date of filing: 15.01.2015
(51) Int. Cl.: H04W 52/02

(54) **Method for exchanging information between a group of emitter receiver devices**
Verfahren zum Informationsaustausch zwischen einer Gruppe von Sender-Empfänger-Vorrichtungen
Procédé pour échanger des informations entre un groupe de dispositifs récepteur-émetteur

(43) Date of publication of application: 20.07.2016
(73) Proprietor: Gogotick, S.L., 31014 Pamplona (ES)
(72) Inventor: Jaúregui Martínez De Morentin, Raúl, 31014 Pamplona (ES); Villadangos Alonso, Jesús, 31014 Pamplona (ES); Ochoa Lainez, Almudena, 31014 Pamplona (ES)
(74) Representative: Pons

(56) References cited:
- US-A1- 2008 058 031
- US-A1- 2013 237 151
- US-A1- 2014 192 692

## Description

### OBJECT OF THE INVENTION

The present invention related with the exchange of information between devices such as mobile phones and the like.

The object of the present invention is a method allowing for optimizing the exchange of information between a group of emitter-receiver devices.

### PRIOR ART

There exist nowadays a number of electronic devices capable of exchanging information with other devices located in the same area by means of several information exchange methods, such as a Bluetooth connection or a WiFi connection. While an obvious example of such devices are mobile telephones, commonly known as "smartphones", devices having such communication capabilities are becoming more and more frequent in the art. Thus, further examples may thus include electronic appliances of several types, such as computers, keyboards, screens, headsets, joysticks, domestic appliances such as refrigerators, conventional ovens, microwave ovens, toasters, washing machines, dishwashing machines, or industrial apparatuses.

Bluetooth connections are advantageous in that they have a very low power consumption. Therefore, Bluetooth may remain activated for a long time while waiting for a transmission. However, a short range and a low data transmission speed are important drawbacks in certain applications such as when sending or receiving long files, for example video files and the like.

On the other hand, WiFi connections have a much higher data transmission speed and a much longer range in comparison with Bluetooth. However, a high power consumption in practice poses a limitation in connection with the maximum time a device using WiFi may wait for a transmission. Additionally, the connection is difficult if the device that is to be connected does not stay in a fixed position.

Relevant prior art where a Wifi connectability is advertised by means of a Bluetooth transmission in order to conserve power includes US 2013/237151 A1, US 2014/192692 A1 and US 2008/058031 A1.

### DESCRIPTION OF THE INVENTION

The inventors of the present application have developed a method specially designed for solving the above drawbacks. In a first basic embodiment of the invention where a device having its WiFi capabilities disabled wishes to carry out a transmission, the method as defined in independent claim 1 is carried out. This method takes advantage of the low battery consumption feature of Bluetooth technology allowing for longer waiting times, and also of the faster data transmission speed of WiFi technology allowing for the transmission of bigger files in a short time. On the other hand, in case the device wishing to carry out the transmission has its WiFi capabilities enabled, again Bluetooth is employed for signaling said upcoming transmission to the group of devices located in the area and a WiFi network is used for carrying out the transmission itself.

In this document, the term "*Bluetooth enabled*" makes reference to a situation where the Bluetooth connection capabilities of an emitter-receiver device are activated or on. In this condition, the emitter-receiver device may find with other emitter-receiver devices located around it and whose Bluetooth is also enabled and also send indications to them. Conversely, the term "*Bluetooth disabled*" makes reference to a situation where the Bluetooth connection capabilities of the emitter-receiver device are deactivated or off.

In this document, the term "*WiFi enabled*" makes reference to a situation where the WiFi connection capabilities of an emitter-receiver device are activated or on for connecting to a WiFi network created by a different emitter-receiver device, or for generating a WiFi network itself. Conversely, the term "*WiFi disabled*" makes reference to a situation where the WiFi connection capabilities of the emitter-receiver device are deactivated or off.

In this document, the term "*generate a WiFi network*" makes reference to a specific emitter-receiver device generating a WiFi network to which a number of other emitter-receiver devices may connect. That is, the specific emitter-receiver device acts as an access port to the WiFi network. In this condition, information may be transmitted between any of the emitter-receiver devices connected to said WiFi network.

In this document, the term "*emitter-receiver device*" makes reference to any type of device capable of establishing communication with other devices by means of Bluetooth or WiFi connections. Examples of emitter-receiver devices are, without limitation, electronic appliances of several types, such as computers, keyboards, screens, headsets, joysticks, domestic appliances such as refrigerators, conventional ovens, microwave ovens, toasters, washing machines, dishwashing machines, or industrial apparatuses, without limitation..

The method for exchanging information between a group of emitter-receiver devices supporting Bluetooth and WiFi, in case of a transmission from an emitter-receiver device having WiFi disabled, comprises the steps of independent claim 1.

The above method allows a first emitter-receiver device having WiFi disabled to send a file to a group of emitter-receiver devices located in the area around it, whether some or all of these emitter-receiver devices have their WiFi capabilities enabled or disabled. Now, a second case arises where a second emitter-receiver device having WiFi enabled is going to make a transmission. In that case, the method as defined in independent claim 2 is carried out.

In a preferred embodiment, the Bluetooth capabilities of all emitter-receiver devices of the invention is used only for scanning and sending indications, the Bluetooth capabilities thus being free for other uses at all times. That is, the method of the invention merely "reads" the name of all Bluetooth devices in the area, but there is no need to carry out any connection because the Bluetooth communication between the emitter-receiver devices takes place in a physical level. For example, this allows the user of a specific emitter-receiver to use a hands-free Bluetooth device at the same time said emitter-receiver device is sending or receiving a transmission by means of the present method. Further, this means that the number emitter-receiver devices exchanging information by means of the present method is not limited by the Bluetooth protocol as to the maximum number of simultaneous connections.

In a preferred embodiment of the invention, the method further comprises a first step of selecting the group of emitter-receiver devices, which are going to exchange information. In other words, the method includes a first step of creating a group of emitter-receiver devices that are going to exchange information therebetween. Any emitter-receiver device located in the area and not forming part of this group will not have access to the information exchanged. Preferably, the selection of the group of emitter-receiver devices, which are going to exchange information is carried out by any emitter-receiver device of the group of emitter-receiver devices by means of Bluetooth. In a further preferred embodiment, the group of emitter-receiver devices which are going to exchange information are identified by means of their MAC addresses
While the Bluetooth connection may remain enabled in all emitter-receiver devices during the WiFi transmission, a preferred embodiment of the invention further comprises the steps of disabling Bluetooth in all emitter-receiver devices in the group before the WiFi transmission and enabling Bluetooth again once said WiFi transmission is finished. This further minimizes power consumption of the whole method.

Although the invention comprises programmable emitter-receiver devices and methods carried out in said devices, the invention also covers the programs adapted for making the devices carry out the method of the invention. Particularly, the invention covers programs incorporated in a storage means or in a carrier signal. The program may be in the form of source code, object code, an intermediate form between source code and object code, such as a partially compiled form, or in any other form suitable for its use for making a device carry out the method of the invention.

The storage means may comprise a ROM memory, a CD-ROM memory, a semiconductor ROM memory, a USB memory, or a magnetic recording medium, such a hard disk or a floppy disc. The storage means may also be an integrated circuit embodying the program, the integrated circuit being adapted for executing, or adapted for being used in the execution, of the method of the invention.

The carrier signal may be an electric signal, an optical signal or a radio signal. The carrier may be any entity or device capable of supporting the program. For example, when the program is incorporated in a signal transmitted by means of a cable or a similar means, the carrier is said cable or means.

### BRIEF DESCRIPTION OF THE DRAWINGS

Figures 1a-1f show the steps of an example of method according to the invention where the transmission is carried out by an emitter-receiver device having WiFi disabled.
Figures 2a-2f show the steps of an example of method according to the invention where the transmission is carried out by an emitter-receiver device having WiFi enabled.

### DESCRIPTION OF A PREFERRED EMBODIMENT

In the following, examples of the method of the invention where the emitter-receiver devices are smartphones are disclosed. In this case, the method of the invention is encoded in an application, or App, installed in the smartphones for controlling the whole process.

### Example 1

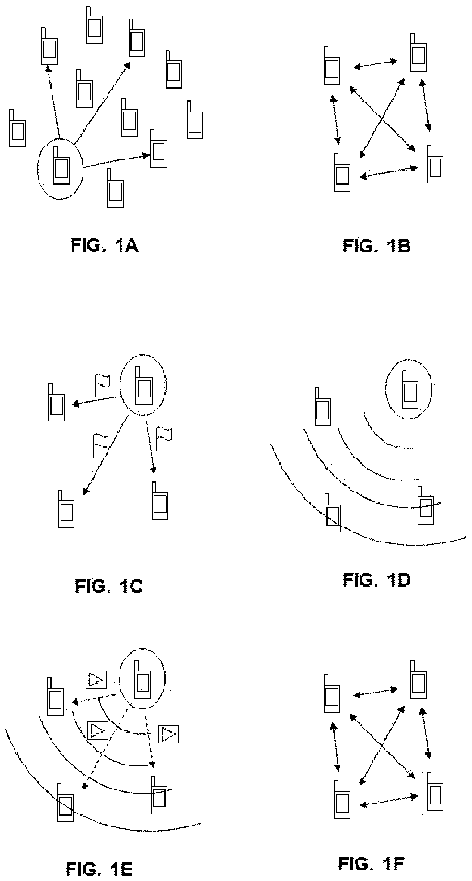

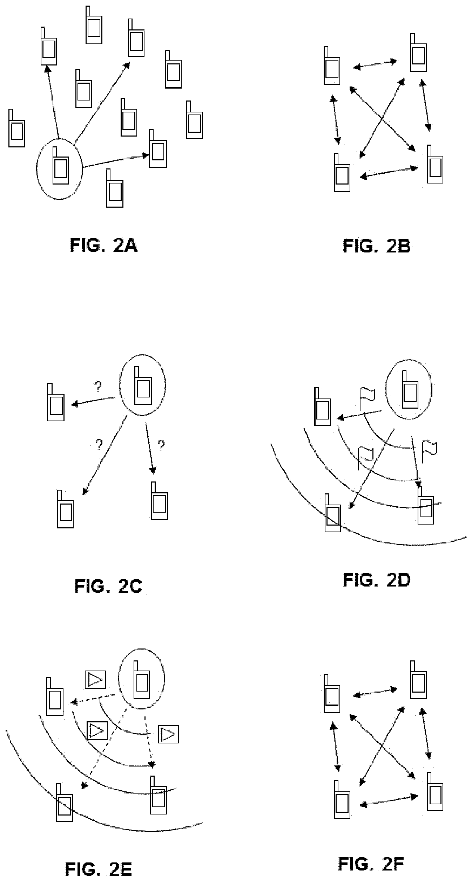

Figs. 1A-1 F show the method of the present invention where a first smartphone having its WiFi capabilities disabled wishes to share a picture file with the rest of the smartphones of the group. The first step is the creation of a group of smartphones that are going to exchange information. To do so, as represented in Fig. 1A, one specific smartphone contacts a number of other smartphones located in the area by means of the respective Bluetooth connections and sends them an invitation to join the group. Note that in Figs. 1 and 2, Bluetooth connections are represented by means of full lines, while WiFi connections are represented by means of broken lines.

Once the smartphones contacted have accepted to form part of the group, a link is established between all smartphones of the group, leaving the uninvited smartphones out. This is shown in Fig. 1B, where smartphones not forming part of the group are deleted. The smartphones of the group may be used normally, and therefore at any given moment some of them will have their WiFi capabilities enabled while others will have their WiFi capabilities disabled. Of course, those smarthpones of the group having their WiFi capabilities disabled are consuming less power.

In a certain moment, said first smartphone of the group decides to send a file to the rest of the smartphones of the group. Accordingly, a flag is sent by means of Bluetooth from said smartphone to the rest of the smartphones in the group indicating its intention to carry out the transmission of a file, as shown in Fig. 1C. Then, said first smartphone enables its WiFi capabilities for generating a WiFi network to which the rest of smartphones in the group can connect. Of these, those smarthpones having their WiFi capabilities already enabled just connect to said WiFi network just created by the first smarthpone, while those smartphones not having their WiFi capabilities enabled first enable said WiFi capabilities and then they also connect to said WiFi network just created by the first smartphone. This situation is represented in Fig. 1D.

Now, the transmission of the picture file from the first smartphone creating the WiFi and the rest of the smartphones of the group takes place, as shown in Fig. 2E.

Once the transmission of the file is finished, WiFi connectivity is disabled in those smartphones previously having WiFi disabled. This includes the one generating the WiFi network, the just created WiFi network thus disappearing. The final situation is shown in Fig. 1F, where only the Bluetooth connection remains between the smartphones of the group.

### Example 2

Figs. 2A-1F show the method of the present invention where a first smartphone having its WiFi capabilities enabled wishes to share a picture file with the rest of the smartphones of the group. The first step is the creation of a group of smartphones that are going to exchange information. To do so, as represented in Fig. 2A, one specific smartphone contacts a number of other smartphones located in the area by means of the respective Bluetooth connections and sends them an invitation to join the group.

Now, as represented in Fig. 1C, the second smartphone checks for a WiFi network created by another one of the smartphones in the group. This may be the case, for example, if there is a transmission taking place from one of the other smartphones in the group.

However, here we suppose there is no WiFi network present, and therefore the second smartphone itself generates a WiFi network, as represented in Fig. 1D. The second smartphone also uses Bluetooth to send a flag to the rest of smartphones in the group for indicating them that there is an upcoming transmission. Note that, just as in the previous case, there may be some smartphones in the group having WiFi enabled and some smartphones in the group having WiFi disabled. Therefore, some of these smartphones will have to enable their WiFi capabilities.

Next, as shown in Fig. 1E, the transmission from the second smartphone to the rest of the smartphones in the group is carried out. Finally, as shown in Fig. 1F, the WiFi capabilities are disabled in those smartphones of the group where WiFi was disabled at the beginning of the process.

Although not represented in the figures, note that the Bluetooth connectivity of the smartphones of the group may remain enabled during the whole process, since power consumption is not very high and the time taken for carrying the WiFi transmission is usually short. However, it would be possible for the method of the invention to disable the Bluetooth connectivity of the smartphones of the group during the WiFi transmission in order to save power.

## Claims

1. Method for exchanging information between a group of emitter-receiver devices supporting Bluetooth and WiFi, wherein a transmission from an emitter-receiver device having WiFi disabled comprises the following steps:
- each emitter-receiver device having WiFi disabled and Bluetooth enabled carries out Bluetooth scans for detecting Bluetooth identification names of other emitter-receiver devices located in the Bluetooth reception range;
- in case a first emitter-receiver device having WiFi disabled has a transmission to make, said emitter-receiver device:
- indicates so to other emitter-receiver devices in the Bluetooth reception range by means of signaling a Bluetooth transmission indication to said other emitter-receiver devices in the Bluetooth reception range, wherein the Bluetooth transmission indication is encoded into the Bluetooth identification name of the first emitter-receiver device, and
- generates a WiFi network;
- upon reception of the Bluetooth transmission indication from the first emitter-receiver device, WiFi is enabled in all emitter-receiver devices in the Bluetooth reception range previously having WiFi disabled and they connect to said WiFi network generated by the first emitter-receiver device; and all emitter-receiver devices in the Bluetooth reception range previously having WiFi enabled also connect to said WiFi network;
- the transmission from the first emitter-receiver device to the rest of the emitter-receiver devices in the WiFi reception range takes place by means of the respective WiFi connections to said WiFi network generated by the first emitter-receiver device; and
- once the transmission is finished, WiFi is disabled in said first emitter-receiver device and in all said emitter-receiver devices in the WiFi reception range previously having WiFi disabled.

2. Method for exchanging information between a group of emitter-receiver devices supporting Bluetooth and WiFi, wherein a transmission from an emitter-receiver device having WiFi enabled comprises the following steps:
- each emitter-receiver device having WiFi enabled carries out WiFi scans for detecting a WiFi network generated by one emitter-receiver device located in the WiFi reception range;
- if there is a WiFi network generated by one of the emitter-receiver devices in the WiFi reception range, each emitter-receiver device having WiFi enabled connects to said WiFi network;
- if there is no WiFi network generated by one of the emitter-receiver devices in the WiFi reception range and a second emitter-receiver device having WiFi enabled has a transmission to make, said second emitter-receiver device generates a WiFi network and indicates an upcoming transmission to other emitter-receiver devices in the Bluetooth reception range by means of a Bluetooth transmission indication wherein the Bluetooth transmission indication is encoded into a Bluetooth identification name of the second emitter-receiver device;
- upon reception of the Bluetooth indication from the second emitter-receiver device, WiFi is enabled in all emitter-receiver devices in the Bluetooth reception range previously having WiFi disabled and they connect to said WiFi network, and all emitter-receiver devices in the WiFi reception range previously having WiFi enabled also connect to said WiFi network;
- the transmission from the second emitter-receiver device to the rest of the plurality of emitter-receiver devices in the WiFi reception range takes place by means of the respective WiFi connections to said WiFi network generated by said second emitter-receiver device; and
- once the transmission is finished, WiFi is disabled in said all emitter-receiver devices in the WiFi reception range previously having WiFi disabled.

3. Method according to any one of the previous claims, where the Bluetooth capabilities of all emitter-receiver devices are used only for scanning and sending indications, thus being free for other uses at all times.

4. Method according to any one of the previous claims, further comprising a first step of selecting the group of emitter-receiver devices which are going to exchange information.

5. Method according to claim 4, where the selection of the group of emitter-receiver devices which are going to exchange information is carried out by any emitter-receiver device of the group of emitter-receiver devices by means of Bluetooth.

6. Method according to any of claims 4-5, where the group of emitter-receiver devices which are going to exchange information are identified by means of their MAC addresses.

7. Method according to any of the previous claims, further comprising the steps of disabling Bluetooth in all emitter-receiver devices in the group before the WiFi transmission and enabling Bluetooth again once said WiFi transmission is finished.

8. Non-volatile storage means incorporating a program comprising instructions for making a programmable device carry out the method according to any of claims 1- 7.

## Patentansprüche

1. Verfahren zum Austauschen von Informationen zwischen einer Gruppe von Bluetooth und WiFi unterstützenden Sender-Empfänger-Vorrichtungen, wobei eine Übertragung von einer Sender-Empfänger-Vorrichtung mit deaktiviertem WiFi die folgenden Schritte umfasst:
- jede Sender-Empfänger-Vorrichtung mit deaktiviertem WiFi und aktiviertem Bluetooth führt Bluetooth-Suchen zum Erfassen von Bluetooth-Identifikationsnamen anderer Sender-Empfänger-Vorrichtungen aus, die sich im Bluetooth-Empfangsbereich befinden;
- wobei, falls eine erste Sender-Empfänger-Vorrichtung mit deaktiviertem WiFi eine Übertragung durchzuführen hat, die Sender-Empfänger-Vorrichtung:
- dies anderen Sender-Empfänger-Vorrichtungen im Bluetooth-Empfangsbereich mittels Signalisierens einer Bluetooth-Übertragungsanzeige an die anderen Sender-Empfänger-Vorrichtungen im Bluetooth-Empfangsbereich anzeigt, wobei die Bluetooth-Übertragungsanzeige in den Bluetooth-Identifikationsnamen der ersten Sender-Empfänger-Vorrichtung codiert wird, und
- ein WiFi-Netzwerk erzeugt;
- bei Empfang der Bluetooth-Übertragungsanzeige von der ersten Sender-Empfänger-Vorrichtung wird WiFi in allen Sender-Empfänger-Vorrichtungen im Bluetooth-Empfangsbereich mit vorher deaktiviertem WiFi aktiviert, und sie schließen sich an das von der ersten Sender-Empfänger-Vorrichtung erzeugte WiFi-Netzwerk an; und alle Sender-Empfänger-Vorrichtungen im Bluetooth-Empfangsbereich mit vorher aktiviertem WiFi schließen sich ebenfalls an das WiFi-Netzwerk an;
- die Übertragung von der ersten Sender-Empfänger-Vorrichtung an den Rest der Sender-Empfänger-Vorrichtungen im WiFi-Empfangsbereich findet mittels der jeweiligen WiFi-Verbindungen mit dem von der ersten Sender-Empfänger-Vorrichtung erzeugten WiFi-Netzwerk statt; und
- sobald die Übertragung abgeschlossen ist, wird WiFi in der ersten Sender-Empfänger-Vorrichtung und in allen der Sender-Empfänger-Vorrichtungen im WiFi-Empfangsbereich mit vorher deaktiviertem WiFi deaktiviert.

2. Verfahren zum Austauschen von Informationen zwischen einer Gruppe von Bluetooth und WiFi unterstützenden Sender-Empfänger-Vorrichtungen, wobei eine Übertragung von einer Sender-Empfänger-Vorrichtung mit aktiviertem WiFi die folgenden Schritte umfasst:
- jede Sender-Empfänger-Vorrichtung mit aktiviertem WiFi führt WiFi-Suchen zum Erfassen eines WiFi-Netzwerks aus, das von einer Sender-Empfänger-Vorrichtungen erzeugt wird, die sich im WiFi-Empfangsbereich befindet;
- wenn ein von einer der Sender-Empfänger-Vorrichtungen erzeugtes WiFi-Netzwerk im WiFi-Empfangsbereich vorhanden ist, schließt sich jede Sender-Empfänger-Vorrichtung mit aktiviertem WiFi an das WiFi-Netzwerk an;
- wenn kein von einer der Sender-Empfänger-Vorrichtungen erzeugtes WiFi-Netzwerk im WiFi-Empfangsbereich vorhanden ist und eine zweite Sender-Empfänger-Vorrichtung mit aktiviertem WiFi eine Übertragung durchzuführen hat, erzeugt die zweite Sender-Empfänger-Vorrichtung ein WiFi-Netzwerk und zeigt eine bevorstehende Übertragung anderen Sender-Empfänger-Vorrichtungen im Bluetooth-Empfangsbereich mittels einer Bluetooth-Übertragungsanzeige an, wobei die Bluetooth-Übertragungsanzeige in einen Bluetooth-Identifikationsnamen der zweiten Sender-Empfänger-Vorrichtung codiert wird;
- bei Empfang der Bluetooth-Übertragungsanzeige von der zweiten Sender-Empfänger-Vorrichtung wird WiFi in allen Sender-Empfänger-Vorrichtungen im Bluetooth-Bereich mit vorher deaktiviertem WiFi aktiviert, und sie schließen sich an das WiFi-Netzwerk an, und alle Sender-Empfänger-Vorrichtungen im WiFi-Empfangsbereich mit vorher aktiviertem WiFi schließen sich ebenfalls an das WiFi-Netzwerk an;
- die Übertragung von der zweiten Sender-Empfänger-Vorrichtung an den Rest der Mehrzahl von Sender-Empfänger-Vorrichtungen im WiFi-Empfangsbereich findet mittels der jeweiligen WiFi-Verbindungen mit dem von der zweiten Sender-Empfänger-Vorrichtung erzeugten WiFi-Netzwerk statt; und
- sobald die Übertragung abgeschlossen ist, wird WiFi in allen der Sender-Empfänger-Vorrichtungen im WiFi-Empfangsbereich mit vorher deaktiviertem WiFi deaktiviert.

3. Verfahren nach einem der vorhergehenden Ansprüche, wobei die Bluetooth-Fähigkeiten aller Sender-Empfänger-Vorrichtungen nur zum Suchen und Senden von Anzeigen verwendet werden, so dass sie jederzeit für andere Verwendungszwecke frei sind.

4. Verfahren nach einem der vorhergehenden Ansprüche, ferner umfassend einen ersten Schritt des Auswählens der Gruppe von Sender-Empfänger-Vorrichtungen, die im Begriff sind, Informationen auszutauschen.

5. Verfahren nach Anspruch 4, wobei die Auswahl der Gruppe von Sender-Empfänger-Vorrichtungen, die im Begriff sind, Informationen auszutauschen, durch eine beliebige Sender-Empfänger-Vorrichtung der Gruppe von Sender-Empfänger-Vorrichtungen mittels Bluetooth ausgeführt wird.

6. Verfahren nach einem der Ansprüche 4 bis 5, wobei die Gruppe von Sender-Empfänger-Vorrichtungen, die im Begriff sind, Informationen auszutauschen, mittels ihrer MAC-Adressen identifiziert werden.

7. Verfahren nach einem der vorhergehenden Ansprüche, ferner umfassend die Schritte des Deaktivierens von Bluetooth in allen Sender-Empfänger-Vorrichtungen in der Gruppe vor der WiFi-Übertragung und erneuten Aktivierens von Bluetooth, sobald die WiFi-Übertragung abgeschlossen ist.

8. Nichtflüchtiges Speichermedium, umfassend ein Programm, das Anweisungen zum Veranlassen einer programmierbaren Vorrichtung zum Ausführen des Verfahrens nach einem der Ansprüche 1 bis 7 umfasst.

## Revendications

1. Procédé pour échanger des informations entre un groupe de dispositifs émetteur-récepteur ayant les technologies Bluetooth et WiFi, dans lequel une transmission à partir d'un dispositif émetteur-récepteur ayant le WiFi désactivé comprend les étapes suivantes :
- chaque dispositif émetteur-récepteur ayant le Wi-Fi désactivé et le Bluetooth activé effectue des analyses Bluetooth pour détecter les noms d'identification Bluetooth d'autres dispositifs émetteur-récepteur situés dans la plage de réception Bluetooth ;
- si un premier dispositif émetteur-récepteur dont le WiFi est désactivé doit effectuer une transmission, ledit dispositif émetteur-récepteur :
- l'indique à d'autres dispositifs émetteur-récepteur, dans la plage de réception Bluetooth au moyen de la signalisation d'une indication de transmission Bluetooth auxdits autres dispositifs émetteur-récepteur dans la plage de réception Bluetooth, dans lequel l'indication de transmission Bluetooth est codée dans le nom d'identification Bluetooth du premier dispositif émetteur-récepteur et
- génère un réseau WiFi ;
- lors de la réception de l'indication de transmission Bluetooth du premier dispositif émetteur-récepteur, le WiFi est activé dans tous les dispositifs émetteur-récepteur compris dans la plage de réception Bluetooth ayant précédemment le WiFi désactivé et ces derniers se connectent audit réseau WiFi généré par le premier dispositif émetteur-récepteur ; et tous les dispositifs émetteur-récepteur de la plage de réception Bluetooth ayant précédemment activé le WiFi sont également connectés audit réseau WiFi ;
- la transmission du premier dispositif émetteur-récepteur a lieu vers le reste des dispositifs émetteur-récepteur, dans la plage de réception WiFi, au moyen des connexions WiFi respectives audit réseau WiFi générées par le premier dispositif émetteur-récepteur ; et
- une fois la transmission terminée, le WiFi est désactivé dans ledit premier dispositif émetteur-récepteur et dans tous lesdits dispositifs émetteur-récepteur, dans la plage de réception WiFi, ayant précédemment le WiFi désactivé.

2. Procédé pour échanger des informations entre un groupe de dispositifs émetteur-récepteur ayant les technologies Bluetooth et WiFi, dans lequel une transmission à partir d'un dispositif émetteur-récepteur ayant le WiFi activé comprend les étapes suivantes :
- chaque dispositif émetteur-récepteur ayant le Wi-Fi activé effectue des analyses WiFi pour détecter un réseau WiFi généré par un dispositif émetteur-récepteur situé dans la plage de réception WiFi ;
- s'il existe un réseau WiFi généré par l'un des dispositifs émetteur-récepteur, dans la plage de réception WiFi, chaque dispositif émetteur-récepteur ayant le Wi-Fi activé connecte audit réseau WiFi ;
- si aucun réseau WiFi généré par un dispositif émetteur-récepteur n'existe dans la plage de réception WiFi et un second dispositif émetteur-récepteur ayant le WiFi activé a une transmission à effectuer, ledit second dispositif émetteur-récepteur génère un réseau WiFi et indique une prochaine transmission à d'autres dispositifs émetteur-récepteur, dans la plage de réception Bluetooth, au moyen d'une indication de transmission Bluetooth, l'indication de transmission Bluetooth étant codée dans un nom d'identification Bluetooth du second dispositif émetteur-récepteur ;
- lors de la réception de l'indication Bluetooth du premier dispositif émetteur-récepteur, le WiFi est activé dans tous les dispositifs émetteur-récepteur compris dans la plage de réception Bluetooth ayant précédemment le WiFi désactivé et ils se connectent à ce réseau WiFi et à tous les dispositifs émetteur-récepteur, dans la plage de réception WiFi ayant précédemment le WiFi activé étant également connecté au dit réseau WiFi ;
- la transmission du second dispositif émetteur-récepteur au reste de la pluralité de dispositifs émetteur-récepteur, dans la plage de réception WiFi a lieu au moyen des connexions WiFi respectives audit réseau WiFi générées par ledit second dispositif émetteur-récepteur ; et
- une fois la transmission terminée, le WiFi est désactivé dans tous les dispositifs émetteur-récepteur, dans la plage de réception WiFi ayant précédemment le WiFi désactivé.

3. Procédé, selon l'une quelconque des revendications précédentes, dans lequel les capacités Bluetooth de tous les dispositifs émetteur-récepteur sont utilisées uniquement pour numériser et envoyer des indications, donc ils sont libres, à tout moment, pour toute autre utilisation.

4. Procédé, selon l'une quelconque des revendications précédentes, comprenant en outre une première étape de sélection du groupe de dispositifs émetteur-récepteur qui vont échanger des informations.

5. Procédé, selon la revendication 4, dans lequel la sélection du groupe de dispositifs émetteur-récepteur qui vont échanger des informations est effectuée par tout dispositif émetteur-récepteur du groupe de dispositifs émetteur-récepteur via Bluetooth.

6. Procédé, selon l'une quelconque des revendications 4 à 5, dans lequel le groupe de dispositifs émetteur-récepteur qui vont échanger des informations est identifié au moyen de leurs adresses MAC.

7. Procédé, selon l'une quelconque des revendications précédentes, comprenant en outre les étapes consistant à désactiver le Bluetooth dans tous les dispositifs émetteur-récepteur du groupe avant la transmission WiFi et activant à nouveau le Bluetooth, une fois que ladite transmission WiFi est terminée.

8. Moyen de mémorisation non volatile incorporant un programme comprenant des instructions pour faire en sorte qu'un dispositif programmable exécute le procédé, selon l'une quelconque des revendications 1 à 7.
